# EUROPEAN PATENT APPLICATION

(11) **EP 1 458 037 A1**
(43) Date of publication of application: **15.09.2004**
(21) Application number: 04251410.9
(22) Date of filing: 11.03.2004
(51) Int. Cl.: H01M 2/02

(54) **Solid state battery**

(30) Priority: 14.03.2003 JP 2003069966
(71) Applicant: MATSUSHITA ELECTRIC INDUSTRIAL CO., LTD., Kadoma-shi, Osaka 571-8501 (JP)
(72) Inventor: Mino, Shinji, Ibaraka-shi, Osaka, 567-0036 (JP); Ishii, Hironori, Hirakata-shi, Osaka 573-0165 (JP)
(74) Representative: Price, Paul Anthony King

(57) **Abstract**

A solid state battery comprises a substrate (11); a power-generating element comprising a lower current collector layer (12), a lower electrode layer (13), an electrolyte layer (14), an upper electrode layer (15) and an upper current collector layer (16) laminated in this order on the substrate; and a protective film (17) covering at least side faces of the power-generating element. At least one portion of the protective film (17) has a stepless smooth surface, the portion extending from an upper part covering an edge of the upper current collector layer (16) to a lower end part contacting with the substrate (11), and an acute angle θ formed between the surface of the substrate and a shortest oblique line (L) is not greater than 70 degrees. The oblique line (L) extends from a point (P) on the edge of the upper current collector layer (16) to a point (Q) on the outer perimeter of the interface between the lower end part of the protective film (17) and the substrate (11).

With this construction, the protective film does not increase the overall height of the battery, and will not crack as the battery expands and contracts during charging and discharging. Also electric leads (48 in Fig. 5) may be formed on the smooth outer surface of the protective film without breaks occurring in the leads.

## Description

### BACKGROUND OF THE INVENTION

A thin film solid state battery is typically produced by laminating, on a substrate, a lower current collector layer, a lower electrode layer, an electrolyte layer, an upper electrode layer and an upper current collector layer in this order to form a power-generating element. From the viewpoint of preventing short-circuiting, the higher the layer is located, the smaller the dimension thereof is (see FIGs. 2 to 4 in Japanese Laid-Open Patent Publication No. Hei 10-284130). In order to protect a power-generating element from external environment, the whole surface of the power-generating element is usually covered with a protective film.

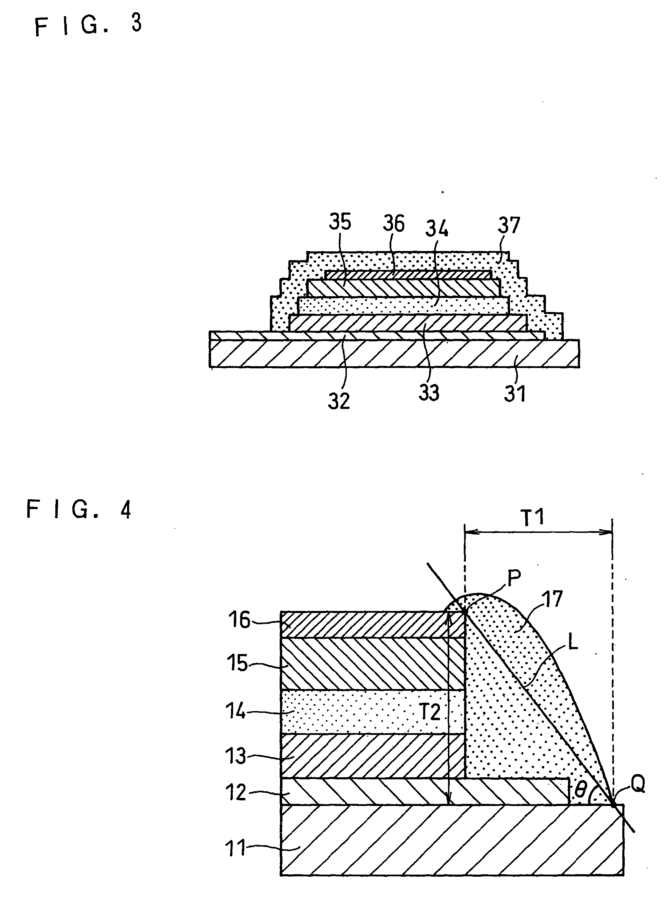

FIG. 3 shows an example of a cross-section of a conventional thin film solid state battery. The solid state battery comprises a substrate 31 and a power-generating element comprising a positive electrode current collector layer 32, a positive electrode active material layer 33, a solid electrolyte layer 34, a negative electrode active material layer 35 and a negative electrode current collector layer 36 laminated in this order on the substrate 31. The higher the layer is located, the smaller the dimension thereof is. Accordingly, the power-generating element has staircase-shaped side faces. A protective film 37 covering the power-generating element therefore has staircase-shaped side faces similar to that of the power-generating element because the side faces of the protective film are formed along those of the power-generating element.

The protective film is known to be made of an oxide such as silicon oxide or titanium oxide, a nitride such as silicon nitride, a resin, a metal, a ceramic or the like (see claim 12 of Japanese Laid-Open Patent Publication No. 2002-42863 and claim 1 of the United States Laid-Open Patent Publication No. 2002/71989). Because the protective film is required to completely prevent moisture or water from entering, studies on a thick protective film and a multi-layered protective film are carried out.

As described above, the whole surface of the power-generating element is usually covered with a protective film. This, however, increases the whole thickness of the solid state battery, and the battery will have a low capacity per volume. Additionally, when the battery expands and contracts during the charge/discharge reaction, a stress might be applied and thus the protective film might be deformed or broken.

Furthermore, when electric leads are arranged on the staircase-shaped surface portion of the protective film covering the side face of the power-generating element and electric leads are connected to the top surface of the uppermost current collector layer, the leads might be broken due to the staircase shape. The thicker each of the layers constituting the power-generating element is, the steeper the staircase shape becomes, raising a possibility of breaking the leads. In order to produce a solid state battery with a high capacity of not less than 1 mAh/cm², the thickness should be 13 µm or more in the case of using a positive electrode made of LiCoO₂. Accordingly, the staircase shape formed on the surface of the protective film will also have a step height of 13 µm or more. Arranging electric leads on such surface increases a possibility of breaking the electric leads, and therefore reliability cannot be attained.

### SUMMARY OF THE INVENTION

The present invention relates to a solid state battery comprising: a substrate; a power generating element comprising a lower current collector layer, a lower electrode layer, an electrolyte layer, an upper electrode layer and an upper current collector layer laminated in this order on the substrate; and a protective film covering at least side faces of the power generating element.

In view of the above problems, the present invention provides a solid state battery comprising: a substrate; a power-generating element comprising a lower current collector layer, a lower electrode layer, an electrolyte layer, an upper electrode layer and an upper current collector layer laminated in this order on the substrate; and a protective film covering at least side faces of the power-generating element, wherein at least one portion of the protective film has a stepless smooth surface, the portion extending from an upper part covering an edge of the upper current collector layer to a lower end part contacting with the substrate, and an acute angle θ formed between the surface of the substrate and a shortest oblique line is not greater than 70 degrees, the oblique line extending from a point on the edge of the upper current collector layer which is covered with the upper part of the portion to a point on the outer perimeter of the interface between the lower end part and the substrate.

The protective film may comprise at least one selected from the group consisting of silicon oxide, silicon nitride, silicon carbide, tantalum oxide, aluminum oxide, titanium oxide and a resin.

The present invention further relates to the aforesaid solid state battery further comprising an electric lead connected to the power-generating element and disposed on the smooth surface of the protective film.

According to the present invention, it is possible to provide a highly reliable solid state battery in which the thickness of the protective film does not affect the whole thickness of the battery, cracks on the protective film can be prevented from occurring and electric leads can be freely arranged on the protective film.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWINGS

FIG. 1 is a vertical cross-sectional view of a solid state battery according to one embodiment of the present invention.
FIG. 2 is a vertical cross-sectional view of a solid state battery according to another embodiment of the present invention.
FIG. 3 is a vertical cross-sectional view of a conventional solid state battery.
FIG. 4 is an enlarged view of a relevant part of the solid state battery of FIG. 1.
FIG. 5 is a top plan view of a power-generating element of a solid state battery in accordance with EXAMPLE 1 of the present invention.

### DETAILED DESCRIPTION OF THE PREFERRED EMBODIMENTS

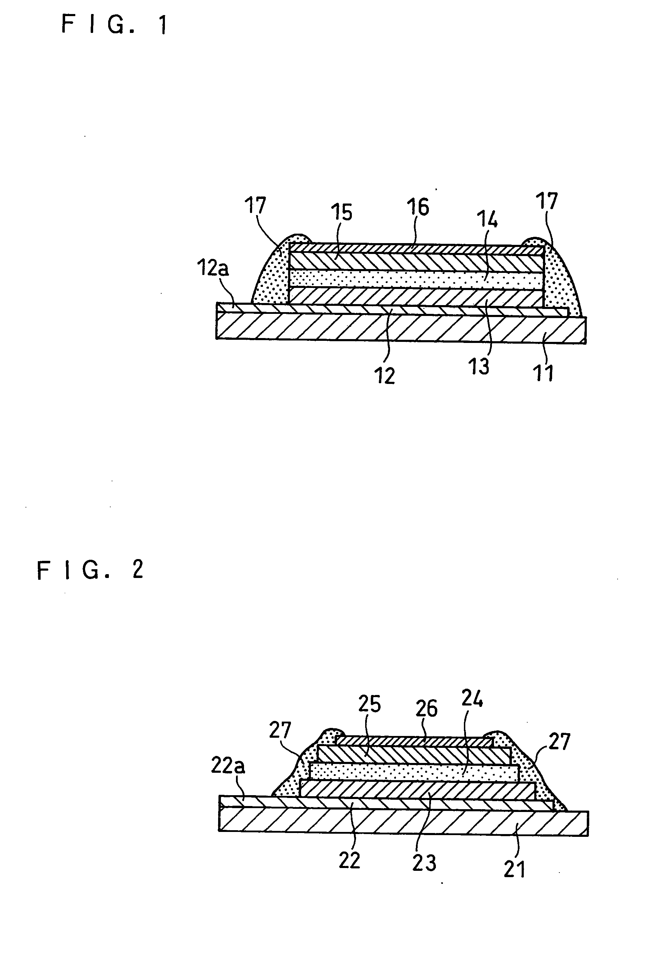

FIG. 1 is a cross-sectional view of a solid state battery according to one embodiment of the present invention.

In FIG. 1, on a substrate 11 are sequentially laminated a lower current collector layer 12, a lower electrode layer 13, an electrolyte layer 14, an upper electrode layer 15 and an upper current collector layer 16. The lower current collector 12 has an exposed portion 12a which is not covered by a protective film 17 and thus exposed to the outside. The side faces of the lower electrode layer 13, the electrolyte layer 14, the upper electrode layer 15 and the upper current collector layer 16 are flush with each other in the cross-sectional view. The side faces of the power-generating element are covered with the protective film 17 whereas the top surface of the upper current collector layer 16 is not covered with the protective film 17 and therefore is exposed. The surface of the protective film 17 has a smooth curve in the cross-sectional view, and its lower end part on one side of the power-generating element (right side of FIG. 1) is in contact with the substrate 11.

FIG. 2 is a cross-sectional view of a solid state battery according to another embodiment of the present invention.

In FIG. 2, on a substrate 21 are sequentially laminated a lower current collector layer 22, a lower electrode layer 23, an electrolyte layer 24, an upper electrode layer 25 and an upper current collector layer 26. The lower current collector layer 22 has an exposed portion 22a which is not covered by a protective film 27 and thus exposed to the outside. The lower electrode layer 23, the electrolyte layer 24, the upper electrode layer 25 and the upper current collector layer 26 are placed in a decreasing order of dimension from the lower placement. Thus, the side faces of the power-generating element have a staircase shape. In this embodiment also, the top surface of the upper current collector layer 26 is not covered with the protective film 27 and therefore is exposed. The surface of the protective film 27 has a smooth curve in the cross-sectional view, and its lower end part on one side of the power-generating element (right side of FIG. 2) is in contact with the substrate 21.

It is to be noted that the structures shown in FIGs. 1 and 2 are only examples because a power-generating element comprising laminated thin films is made in a wide variety of shapes. The present invention is applicable to a power-generating element in any shape.

There are the following features in the structure of the protective film covering at least side faces of the power-generating element.

FIG. 4 is an enlarged view of a relevant part of the protective film of FIG. 1.

The protective film 17 has a stepless smooth surface on a portion thereof, the portion extending from an upper part covering an edge of the upper current collector layer to a lower end part contacting with the substrate. Arranging electric leads on such smooth surface greatly reduces a possibility of breaking the electric leads. The whole surface of the protective film is, preferably but not necessarily, smooth. When the location where leads are placed is determined in advance, only the predetermined part should have a smooth surface.

In FIG. 4, one point on an edge of the upper current collector layer 16 which is in contact with the upper part of the protective film 17 is referred to as "P". Further, one point on the outer perimeter of the interface between the lower end part and the substrate 11 is referred to as "Q". When an oblique line "L" extending from "P" to "Q" is the shortest, the oblique line "L" makes an acute angle θ with the substrate surface. The acute angle θ should be 70 degrees or less. If the acute angle θ exceeds 70 degrees, the electric leads placed on the surface of the protective film 17 will be broken, failing to achieve the object of the present invention.

The protective film preferably comprises an electronically insulating ceramic-based dielectric material or semiconductor material. Examples thereof include silicon oxide, silicon nitride, silicon carbide, tantalum oxide, aluminum oxide and titanium oxide.

An insulating resin material can also be used as the protective film. Examples of such resin include epoxy resins, phenol resins, polyamide resins, olefin resins, acrylic resins and synthetic rubbers.

A protective film made of a ceramic-based dielectric material or semiconductor material can be formed by, with the use of a mask, a sputtering method, electron-beam deposition method, resistance heating deposition method, laser ablation method or the like. The roughness of the protective film surface and the acute angle θ described above can be controlled by a dry-etching process or the like. In the dry-etching process, firstly, a protective film is roughly formed, and then the protective film is partly removed by reactive ion etching or the like. By controlling etching conditions such as gas pressure of the etching gas, for example, it is possible to obtain a protective film with the desired surface condition.

A protective film made of resin can be formed by casting, screen-printing, spin coating or the like. Firstly, a resin material is applied on the substrate such that the material covers side faces of the power-generating element. The applied material is then allowed to stand for a certain period of time to allow the resin material to spread. Thereby, the acute angle θ described above can be adjusted to 70 degrees or less.

The selection of the material for an electric lead depends on the material to which the lead is connected. For this reason, there is no specific limitation thereon, but the electric lead is preferably made of a low resistance material that can be formed into a thin film and can make ohmic contact with the current collector layer or substrate. The electric leads in the form of a thin film can be formed by, with the use of a mask, a sputtering method, electron-beam deposition method, resistance heating deposition method, laser ablation method or the like. The patterning of the electric leads depends on the mask with a predetermined pattern.

The selection of the substrate depends on the circuit or device in which the solid state battery is installed. Accordingly, there is no specific limitation thereon. For example, a semiconductor substrate such as silicon substrate or sapphire substrate is preferably used. The semiconductor substrate may be either P-type or N-type.

As for the materials for the upper and lower current collector layers, the selection is made according to the type of the electrode layer to which the current collector layer is connected. Therefore, they are not specifically limited. When the electrode layer serves as a positive electrode, the current collector layer for the electrode layer is preferably made of aluminum, nickel or the like. When the electrode layer serves as a negative electrode, the current collector layer for the electrode layer is preferably made of copper, iron, titanium, nickel or the like. Other than the above, any material can be used as the current collector layer as long as it does not react with the electrode layer to be connected. The thin-film-like current collector layer can be formed by, with the use of a mask, a sputtering method, electron-beam deposition method, resistance heating deposition method, laser ablation method or the like.

The electrolyte layer can be made of any solid electrolyte that can be formed into a thin film. In the case where the solid state battery is a lithium secondary battery, a solid electrolyte having lithium ion conductivity is used. Examples of such solid electrolyte include lithium sulfide, silicon sulfide, lithium phosphate, nitrogen-containing lithium phosphate, lithium iodide, phosphorous sulfide, lithium nitride and any composite thereof. The thin-film-like electrolyte layer can be formed by, with the use of a mask, a sputtering method, electron-beam deposition method, resistance heating deposition method, laser ablation method or the like.

The positive electrode can be made of any positive electrode material that can be formed into a thin film. In the case where the solid state battery is a lithium secondary battery, for example, there can be used a lithium-cobalt oxide, a lithium-nickel oxide, a lithium-manganese oxide, a lithium-iron oxide, a lithium-molybdenum oxide, a lithium-titanium oxide or the like. These materials can be formed into a thin film by, with the use of a mask, a sputtering method, electron-beam deposition method, resistance heating deposition method, laser ablation method or the like.

The negative electrode can be made of any negative electrode material that can be formed into a thin film. In the case where the solid state battery is a lithium secondary battery, for example, there can be used a carbonaceous material, metallic lithium or a lithium alloy such as lithium-aluminum alloy. These materials can be made into a thin film by, with the use of a mask, a sputtering method, electron-beam deposition method, resistance heating deposition method, laser ablation method or the like.

When the negative electrode is made of a carbonaceous material, the carbonaceous material is preferably doped with lithium beforehand by ion implantation. Alternatively, lithium and a carbonaceous material may be simultaneously sputtered to form a negative electrode layer.

The upper and lower electrode layers are preferably thick in order to achieve high capacity. If the thickness is too great, however, it will be difficult to obtain a thin battery. For this reason, the preferred thickness is about 1 to 10 µm.

### EXAMPLE 1

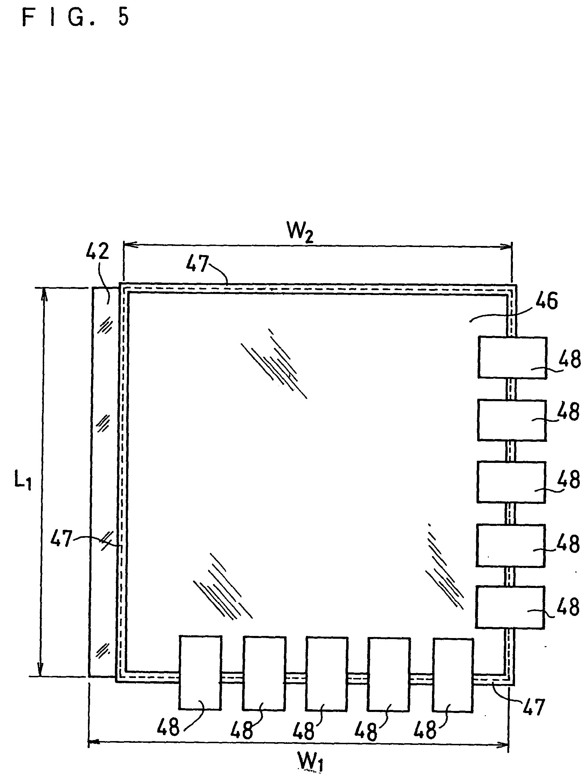

The solid state battery of the present example is now described with reference to FIG. 5 which shows a top plan view of the power-generating element of a produced solid state battery.

First, a silicon oxide film with a thickness of 1500 angstroms was formed on a silicon substrate by plasma CVD (Chemical Vapor Deposition). The silicon oxide film was then covered with a metal mask having a rectangle opening 8 mm in length and 8.8 mm in width for the process to form a positive electrode current collector (lower current collector layer). Specifically, a metallic aluminum film 42 with a thickness of 0.5 µm was formed on the 8 mm × 8.8 mm area of 70.4 mm² defined by L₁ and W₁ in FIG. 5 with the use of a vacuum deposition system under the following conditions.

### [Conditions]

| | |
|---|---|
| Degree of vacuum | 1 mTorr |
| Boat | Tungsten boat with a width of 1 cm |
| Source | Al |
| Electric current | 4.5 A |

Subsequently, the positive electrode current collector was covered with a metal mask with a rectangle opening 8 mm in length and 8 mm in width for the process to form a positive electrode (lower electrode layer). Specifically, a LiCoO₂ film with a thickness of 5 µm was formed on the 8 mm × 8 mm area of 64 mm² defined by L₁ and W₂ in FIG. 5 by sputtering under the following conditions.

### [Conditions]

| | |
|---|---|
| Output | 200 W |
| Background gas | Ar/O₂ = 3/1 (volume ratio) |
| Gas flow | 20 sccm |
| Degree of vacuum | 20 mTorr |

The positive electrode was covered with a metal mask with a rectangle opening 8 mm in length and 8 mm in width for the process to form a solid electrolyte (electrolyte layer). Specifically, a Li₂S-SiS₂-Li₃PO₄ film with a thickness of 0.5 µm was formed on the 8 mm × 8 mm area of 64 mm² defined by L₁ and W₂ in FIG. 5 by laser ablation under the following conditions.

### [Conditions]

| | |
|---|---|
| YAG laser | 266 nm |
| Energy density | 2025 mJ/cm² |
| Repetition frequency | 10 Hz |
| Number of shots | 36000 |
| Degree of vacuum | 10 mTorr |

The electrolyte layer was covered with a metal mask with a rectangle opening 8 mm in length and 8 mm in width for the process to form a negative electrode (upper electrode layer). Specifically, a graphite film with a thickness of 5 µm was formed on the 8 mm × 8 mm area of 64 mm² defined by L₁ and W₂ in FIG. 5 by laser ablation under the following conditions. Thereby, the entire back surface of the negative electrode faced the entire top surface of the positive electrode with the electrolyte layer interposed therebetween.

### [Conditions]

| | |
|---|---|
| YAG laser | 266 nm |
| Energy density | 2025 mJ/cm² |
| Repetition frequency | 10 Hz |
| Number of shots | 36000 |
| Degree of vacuum | 10 mTorr |

The negative electrode was covered with a metal mask with a rectangle opening 8 mm in length and 8 mm in width for the process to form a negative electrode current collector (upper current collector layer). Specifically, a metallic copper film 46 with a thickness of 0.5 µm was formed on the 8 mm × 8 mm area of 64 mm² defined by L₁ and W₂ in FIG. 5 by vacuum deposition under the following conditions.

### [Conditions]

| | |
|---|---|
| Degree of vacuum | 1 mTorr |
| Boat | Tungsten boat with a width of 1 cm |
| Source | Cu |
| Electric current | 5 A |

In the film forming process described above, metal masks made of stainless steel (SUS 304) with an opening of the specific sizes were used.

Subsequently, a polyimide film as the protective film was formed on the side faces of the power-generating element such that the polyimide film has a smooth surface extending from the upper part of the film covering an edge of the upper current collector layer to the lower end part of the film contacting with the substrate.

To be more precise, with the use of a predetermined mask, a liquid thermosetting polyimide resin (XE 310-6 manufactured by Hitachi Chemical Co., Ltd.) was roughly applied, by casting, along the perimeter of the upper current collector layer with a width of 2 mm. The applied resin was then allowed to stand for a certain period of time (3 to 30 minutes). The mask was then removed and the polyimide resin was cured at 120°C.

Subsequently, the whole surface of the protective film was etched by oxygen plasma. Due to this etching treatment, the protective film 47 remained only on the side faces of the power-generating element and the periphery thereof. This process is called "etch back process". The appearance of the remaining protective film was observed, and any crack was not seen.

In this example, the above-described acute angle θ (tanθ = T₂/T₁) was changed, as shown in Table 1, by changing the standing time after the application of the liquid polyimide resin by casting. "T₂" represents a thickness of the power-generating element, and "T₁" represents a shortest horizontal distance between the point "P" on the edge of the upper current collector layer and the point "Q" on the perimeter of the interface between the protective layer and the substrate as shown in FIG. 4. Ten articles were produced for each of six types of solid state batteries having a protective film with acute angles **θ** (tanθ = T₂/T₁) as listed in Table 1.

**Table 1**

| T₂/T₁ | θ | Incidence ratio of broken electric lead (%) |
|---|---|---|
| 0.6 | 30 | 0 |
| 1 | 45 | 0 |
| 2.1 | 65 | 0 |
| 2.7 | 70 | 10 |
| 3.7 | 75 | 60 |
| 5.7 | 80 | 90 |

Then, in each of the solid state batteries, ten aluminum electric leads 48 for connecting the top surface of the upper current collector and the substrate surface were formed across the surface of the protective film by vacuum deposition using a metal mask under the following conditions. The electric lead had a thickness of 2 µm and a width of 1 mm.

### [Conditions]

| | |
|---|---|
| Degree of vacuum | 1 mTorr |
| Boat | Tungsten boat with a width of 1 cm |
| Source | Al |
| Electric current | 4.5 A |

The electric leads formed were observed by a microscope with a magnification of 500 to check for breaks therein. A ratio of electric leads having a break to a total of 100 electric leads is shown in percentage in Table 1. From the results of Table 1, it is obvious that the batteries with an acute angle θ of not greater than 70 degrees had a remarkably low incidence ratio of the broken lead.

In each of the batteries with an acute angle θ of not greater than 70 degrees, one end of an electric lead whose other end was connected to the upper electrode current collector was connected to an external charge/discharge device. Also, the exposed portion of the lower electrode current collector which is not covered by the protective film was connected to the external charge/discharge device. The battery was then put through 500 charge/discharge cycles under the following conditions.
- Charge :: Current 240 µA, charging time 1 hour, end voltage of charge 4.2 V
- Discharge :: Current 240 µA, discharging time 1 hour, end voltage of discharge 3.0 V

As a result, in any of the batteries, any further lead breakage did not occur and no crack appeared on the protective film.

As described above, according to the structure of the present invention in which the top surface of the power-generating element is not covered with the protective film, it was possible to obtain a thin solid state battery whose protective film is unlikely to be cracked and whose metal electric leads are unlikely to be broken even if the metal electric leads are formed across the surface of the protective film. In such solid state battery, electrode terminals can be provided easily and freely.

### EXAMPLE 2

After producing the same power-generating element as described in Example 1, a silicon oxide film with a width of 2 mm and a maximum thickness of 14 µm were formed, as the protective film, along the perimeter of the upper current collector layer by plasma CVD. In the plasma CVD process, the film growth temperature was set to 380°C. The plasma was generated using a high frequency of 50 kHz with 4 kW. SiH₄ and N₂O as the reaction gas were supplied to the plasma atmosphere such that the film growth rate was controlled to be 70 nm/min. Under these conditions, the silicon oxide film with a maximum thickness of 14 µm was formed in about 3.5 hours.

The formed silicon oxide film was dry-etched and then subjected to the same etch back process as in EXAMPLE 1. Thereby, the silicon oxide film remained only on the side faces of the power-generating element and the periphery thereof. The dry etching was performed by a commonly used reactive ion etch process. Specifically, a radio frequency (RF) of 13.56 MHz was applied between parallel flat electrodes placed in an etching reaction chamber with the supply of CHF₃ gas to generate plasma.

The etching rate was about 700 nm/min. Due to increased anisotropy of the etching process with the use of a gas pressure set to 2 Pa, the silicon oxide film remained only on the side faces of the power-generating element and the periphery thereof. During the etching process, care was taken to prevent overetching and the increase of the isotropy by suspending the etching to observe the condition of the film.

The acute angle θ can be controlled by changing the pressure of CHF₃ gas. Lowering the gas pressure makes the acute angle θ smaller. Conversely, increasing the gas pressure makes the acute angle θ greater. For instance, if the gas pressure is set to 20 Pa or more and the degree of vacuum is reduced from 15 mTorr to 150 mTorr, the anisotropy of the etching process will be low, making it difficult to leave the silicon oxide only on the side faces of the power-generating element and the periphery thereof.

Ten solid state batteries were produced in the same manner as in EXAMPLE 1 except that a silicon oxide film was formed as the protective film as described above. The acute angle θ of the protective film was 70 degrees (tanθ = 2.7).

Likewise, ten articles for each of five types of batteries were produced in the same manner as described above except that, instead of the silicon oxide film, a silicon nitride film, a silicon carbide film, a tantalum oxide film, an aluminum oxide film and a titanium oxide film were respectively formed by a combination of the plasma CVD and the dry etching. These protective films had an acute angle θ of 70 degrees (tanθ = 2.7).

**Table 2**

| Protective film | T₂/T₁ | θ(°) | Incidence ratio of broken electric lead (%) |
|---|---|---|---|
| SiO₂ | 2.7 | 70 | 10 |
| Si₃N₄ | 2.7 | 70 | 10 |
| SiC | 2.7 | 70 | 11 |
| TaO₂ | 2.7 | 70 | 10 |
| Al₂O₃ | 2.7 | 70 | 11 |
| TiO₂ | 2.7 | 70 | 9 |

In each of the solid state batteries, ten aluminum electric leads for connecting the top surface of the upper current collector layer and the substrate surface were formed across the surface of the protective film in the same manner as in EXAMPLE 1. The lead had a thickness of 2 µm and a width of 1 mm. The thus-obtained solid state battery was repeatedly charged and discharged under the same condition as in EXAMPLE 1. After 500 cycles, the battery was observed by a microscope with a magnification of 500 to check for breaks in the electric leads. A ratio of electric leads having a break to a total of 100 electric leads is shown in percentage in Table 2.

### EXAMPLE 3

Ten articles for each of six types of solid state batteries were produced in the same manner as in EXAMPLE 1 except that a silicon oxide film was formed as the protective film and electric leads with a thickness shown in Table 3 were formed. The acute angle **θ** of the protective film was 70 degrees (tanθ = 2.7).

**Table 3**

| Protective film | T₂/T₁ | θ(°) | D (µm) | Incidence ratio of broken electric lead (%) |
|---|---|---|---|---|
| SiO₂ | 2.7 | 70 | 0.5 | 10 |
| SiO₂ | 2.7 | 70 | 1 | 5 |
| SiO₂ | 2.7 | 70 | 2 | 0 |
| SiO₂ | 2.7 | 70 | 5 | 0 |
| SiO₂ | 2.7 | 70 | 7 | 0 |
| SiO₂ | 2.7 | 70 | 10 | 0 |

Similar to the above example, in each of the solid state batteries, ten aluminum electric leads for connecting the top surface of the upper current collector layer and the substrate surface were formed across the surface of the protective film in the same manner as in EXAMPLE 1. The electric lead had a width of 1 mm. The thus-obtained solid state battery was repeatedly charged and discharged under the same condition as in EXAMPLE 1. After 500 cycles, the battery was observed by a microscope with a magnification of 500 to check for breaks in the electric leads. A ratio of electric leads having a break to a total of 100 electric leads is shown in percentage in Table 3.

Other than the protective films used in the above examples, a mixed film comprising at least two selected from the group consisting of silicon oxide, silicon nitride, silicon carbide, tantalum oxide, aluminum oxide and titanium oxide can be used as the protective film. For example, a mixed film comprising silicon oxide and silicon nitride can be used. Alternatively, there can be used a protective film comprising a plurality of films formed by sequentially depositing two or more different films.

It is to be noted that, although a unit cell structure comprising one power-generating element is shown in the above examples, the present invention is also useful to a stacked cell comprising a plurality of power-generating elements.

The present invention is applicable to a device that requires a small and highly reliable solid state battery, preferably, as a small-sized thin film solid state battery to be installed in a substrate such as semiconductor substrate.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A solid state battery comprising:
a substrate;
a power-generating element comprising a lower current collector layer, a lower electrode layer, an electrolyte layer, an upper electrode layer and an upper current collector layer laminated in this order on said substrate; and
a protective film covering at least side faces of said power-generating element,
wherein at least one portion of said protective film has a stepless smooth surface, said portion extending from an upper part covering an edge of said upper current collector layer to a lower end part contacting with said substrate, and an acute angle θ formed between the surface of said substrate and a shortest oblique line is not greater than 70 degrees, said oblique line extending from a point on said edge of said upper current collector layer to a point on the outer perimeter of the interface between said lower end part and said substrate.

2. The solid state battery in accordance with claim 1, wherein said protective film comprises at least one selected from the group consisting of silicon oxide, silicon nitride, silicon carbide, tantalum oxide, aluminum oxide, titanium oxide and a resin.

3. The solid state battery in accordance with claim 1 or 2, further comprising an electric lead connected to said power-generating element and disposed on said smooth surface of the protective film.
